# EUROPÄISCHE PATENTSCHRIFT

(11) **EP 0 970 456 B1**
(45) Veröffentlichungstag und Bekanntmachung des Hinweises auf die Patenterteilung: **12.09.2001**
(21) Anmeldenummer: 98919167.1
(22) Anmeldetag: 26.03.1998
(51) Int. Cl.: G08B 15/00

(54) **SENSORLEUCHTE**
SENSOR LIGHT
APPAREIL D'ECLAIRAGE A DETECTEUR

(30) Priorität: 27.03.1997 DE 29705569 U
(43) Veröffentlichungstag der Anmeldung: 12.01.2000
(73) Patentinhaber: Steinel GmbH & Co. KG, 33442 Herzebrock-Clarholz (DE)
(72) Erfinder: STEINEL, Heinrich, Wolfgang, D-86825 Bad Wörishofen (DE)
(74) Vertreter: Behrmann, Niels, Dipl.-Ing.
(86) Internationale Anmeldenummer: EP9801807
(87) Internationale Veröffentlichungsnummer: WO9844467

(56) Entgegenhaltungen:
- EP-A- 0 591 585
- WO-A-97/06453

## Beschreibung

Die vorliegende Erfindung betrifft eine Sensorleuchte nach dem Oberbegriff des Anspruches 1.

Derartige Sensorleuchten mit einer -- bevorzugt infrarotgesteuerten -- Bewegungserfassung sind aus dem Stand der Technik seit etwa 15 Jahren bekannt und werden zur Beleuchtung von verschiedensten privaten oder gewerblichen Objekten eingesetzt; dabei hat sich insbesondere für Fragen der Alarm- oder Sicherheitstechnik die bewegungsgesteuerte Leuchtmittelaktivierung in einer solchen Vorrichtung, etwa als Reaktion auf eine sich nähernde Person, als besonders nützlich und praktisch herausgestellt.

Insbesondere bei dunkler Umgebung ist es jedoch oft wünschenswert, neben einer bewegungsgesteuerten Lampenaktivierung -- die nicht nur eine rein bedarfsabhängige und damit stromsparende Beleuchtungsschaltfunktion besitzt, sondern durch die Aktivierung auch Signal- bzw. auch Alarmcharakter besitzt, sich etwa aus einem Hausinneren auch nähere Gewißheit über die sich nähernde Person zu schaffen, bevor dann z.B. eine Haustür geöffnet wird. Die bekannte, als "Türspion" bezeichnete Linseneinrichtung in einer Tür vermag oftmals dieses Problem nur unzureichend zu lösen.

Aus dem Stand der Technik ist es ferner bekannt (vgl. z.B WO 97/06453), etwa für eine Haus-Außenüberwachung geeignet eingestellte Video-Anlagen zu benutzen. Hier ist dann an eine Hauswand eine Video-Kamera montiert, deren elektronisch aufgenommenes Bild dann im Hausinneren auf einem geeignet angeschlossenen Monitor beobachtet werden kann. Derartige Video-Überwachungsanlagen sind jedoch nicht nur aufwendig und, insbesondere für den Privatgebrauch, teuer in der Anschaffung; darüber hinaus ist ein beträchtlicher Installationsaufwand notwendig, der oftmals einen Heimwerker überfordert. Darüber hinaus ist, bei einmal installierter bzw. eingerichteter Video-Anlage, die Flexibilität -- etwa bei baulichen Änderungen -- sehr gering, so daß hier üblicherweise eine Neuinstallation erforderlich ist.

Aufgabe der vorliegenden Erfindung ist es daher, eine gattungsgemäße Sensorleuchte zu schaffen, welche zur einfachen, montage- und bedienungsfreundlichen sowie zur flexiblen Erweiterung des Nutzenspektrums einer Sensorleuchte geeignet ist, wobei eine zusätzliche Bildinformation einer Person oder eines Gegenstandes zur Beobachtung erzeugt werden soll, welche die bewegungsgesteuerte Aktivierung des Leuchtmittels veranlaßt hat.

Die Aufgabe wird durch die Sensorleuchte mit den Merkmalen des Schutzanspruches 1 gelöst.

Vorteilhaft ermöglicht dabei die am Gehäuse der Sensorleuchte vorgesehene, elektronische Bilderfassungseinheit eine einfache Montage zusammen mit der eigentlichen Sensorleuchte; darüber hinaus ist weder eine eigene Netzstromversorgung erforderlich, noch müssen etwa für das Bildsignal-- bedingt durch die drahtlose Bildsignalübertragungseinheit -- gesonderte Signalleitungen verlegt werden.

Vorteilhafte Weiterbildungen der Erfindung sind in den Unteransprüchen beschrieben.

So hat es sich als besonders bevorzugt herausgestellt, die Bilderfassungseinheit mittels eines kostengünstigen CCD-Sensors durchzuführen und eine digitale Bildübertragung im GHz-Bereich vorzusehen; nicht nur ist hier die für eine gute Bildübertragung ausreichende Bandbreite erreichbar; darüber hinaus bieten auch derartige Funktstrecken ausreichende Reichweiten bei noch großserientauglichen Fertigungsbedingungen.

Gemäß einer vorteilhaften Weiterbildung der Erfindung ist es zudem vorgesehen, die Sensorleuchte mit einem Mikrofon und einer nachgeschalteten Tonaufnahme- und -übertragungselektronik zu versehen, so daß der drahtlose Übertragungspfad für das Bildsignal um ein zusätzliches, im Bilderfassungsbereich aufgenommenes akustisches Signal erweitert werden kann. Bevorzugt erhält durch diese Weiterbildung dadurch die Sensorleuchte auch die Funktion einer akustischen Überwachungsanlage, die etwa durch eine geeignete Beschaltung und Ergänzung um eine Tonausgabeeinheit in der Sensorleuchte zu einer Gegensprechanlage weitergebildet werden kann. Vorteilhaft wird auf diese Weise nicht nur die einem Nutzer der Sensorleuchte gebotene visuelle Überwachbarkeit durch zusätzliche akustische Signale erweitert; insbesondere kann auch die -- für die Bildübertragung ohnehin vorgesehene -- drahtlose Übertragungsstrecke problemlos für das zusätzliche, akustische Signal genutzt werden, welches (gegenüber dem Bildsignal) eine ohnehin vernachlässigbare Übertragungsbandbreite benötigt.

Weitere Vorteile, Merkmale und Einzelheiten der Erfindung ergeben sich aus der nachfolgenden Beschreibung von Ausführungsbeispielen der Erfindung sowie anhand der Zeichnungen; diese zeigen in
- Fig. 1:: eine Seitenansicht einer bevorzugten Ausführungsform der erfindungsgemäßen Sensorleuchte mit bewegungsgesteuerter, elektronischer Bilderfassung im montierten Zustand an einer Wand;
- Fig. 2:: eine schematische Detailansicht des Kamera- bzw. Bilderfassungsabschnitts im Lampenträger;
- Fig. 3:: ein Blockschaltbild mit den wesentlichen Funktionseinheiten der Ausführungsform gemäß Fig. 1 und Fig. 2, und
- Fig. 4:: eine Explosionszeichnung mit den mechanischen Komponenten einer erfindungsgemäßen, bewegungsgesteuerten Beleuchtungsvorrichtung, die eine Bilderfassungseinrichtung in Form einer Kamera besitzt.

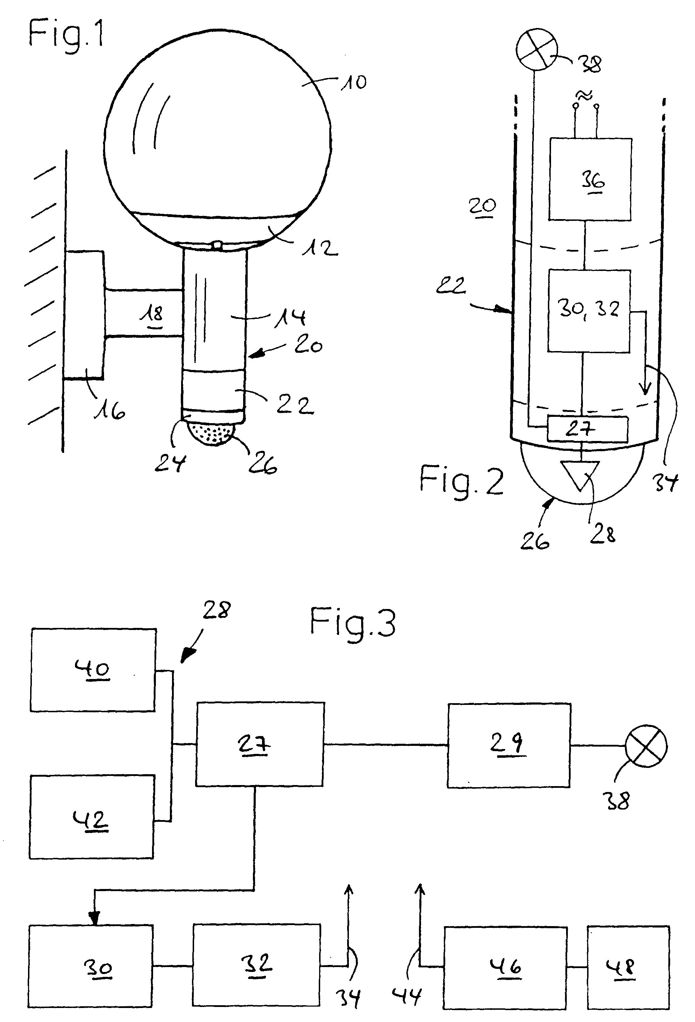

Eine erfindunsgemäße Sensorleuchte einer bevorzugten Ausführungsform ist in Fig. 1 gezeigt. Hinter einer Glaskugel 10 als Lampenschirm sitzt ein mittels eines auf Infrarotbasis arbeitenden Bewegungsdetektors gesteuertes Leuchtmittel. Die Glaskugel 10 ist über einen kugelausschnittsförmigen Glaskugelhalter 12 als Fortsatz eines Lampenträgers 14 mit dem aus einer Wandhalterung 16, einem Armabschnitt 18 sowie dem Lampenträger 14 gebildeten Lampengehäuse 20 verbunden. Die Elemente 12 bis 18 sind bevorzugt als Kunststoff-Spritzteile großserientauglich entworfen und hergestellt.

Am der Glaskugel 10 entgegengesetzten Ende des Lampenträgers weist dieser einen i.w. zylindrischen Gehäuseansatz 22 auf, der bodenseitig von einem Linsenträger 24 sowie einer -- halbkugelförmig ausgebildeten und mit Linsensegmenten versehenen -- Infrarot-(IR-) Linse 26 fortgesetzt wird.

Während der Linsenträger, wie in Fig. 2 gezeigt, zum Aufnehmen einer Steuerelektronik 27 für einen im Erfassungsbereich der Linse 26 sitzenden, ein PIR-Detektorelement aufweisenden Bewegungssensor (PIR = Passiv Infrarot) sowie für ein Helligkeits-Sensorelement vorgesehen ist -- der PIR-Bewegungssensor und das Helligkeits-Sensorelement, etwa ein Phototransistor oder ein LDR sind in Fig. 2 mit dem Element 28 symbolisiert -- nimmt der Gehäuseansatz 22 als Kameraabschnitt eine mittels eines CCD-Sensors realisierte Bilderfassungseinheit 30 auf, die mit einem Hochfrequenz-Sendemodul 32 verbunden ist und über eine Antenne 34 ein Bildsignal der Kamera 30 abstrahlt.

Sowohl die Bilderfassungseinheit 30 mit Sendemodul 32 als auch die Sensorelektronik 27 werden von einem in das Lampengehäuse 20 integrierten Netzteil 36 versorgt, welches, im gezeigten Ausführungsbeispiel, mit extern anliegender Netzspannung versorgt wird.

Als Reaktion auf eine durch das Sensorelement 28 bzw. die nachgeschaltete Sensorelektronik 27 erfaßte Bewegung ist die gezeigte Vorrichtung -- in der ansonsten bekannten Weise -- zur Aktivierung eines (schematisch gezeigten) Leuchtmittels 38 hinter dem Lampenschirm 10 eingerichtet, wobei erfindungsgemäß, als Reaktion auf diese Erfassung, zusätzlich die Bilderfassungseinheit 30 samt dieser nachgeschaltetem Sendemodul 32 aktiviert wird.

Genauer gesagt sitzt der -- nicht näher gezeigte -- CCD-Bilderfassungssensor der Kameraeinheit 30 hinter einem transparenten, optisch zur Bilderfassung geeigneten Fenster des Gehäuseansatzes 22 -- idealerweise ist dieser Gehäuseansatz vollständig aus transparentem Kunststoffmaterial, etwa Acrylglas, in zylindrischer Form ausgebildet -- und ist auf einen Bereich zur Bilderfassung gerichtet, der entweder dem Bereich der Bewegungserfassung durch das Sensorelement 28 entspricht, oder aber einen davon abweichenden Bereich abdeckt. Idealerweise liegt dieser Bilderfassungsbereich der Kameravorrichtung 30 innerhalb eines vom Leuchtmittel 38 im Lampenschirm 10 erzeugten Lichtkegels. Auf diese Weise ist dann -- selbst bei Dunkelheit -- auf einfache und leicht zu montierende Weise nicht nur das Aktivieren einer Leuchte als Reaktion auf eine Bewegung -- etwa eine sich nähernde Person -- möglich; darüber hinaus findet eine ergänzende elektronische Bilderfassung zu Überwachungszwecken statt. Dieses Bildsignal wird dann vorteilhaft durch die bewegungsgesteuerte Beleuchtungsvorrichtung aktiviert, das Lampenlicht wird ausgenutzt, vorteilhaft und ohne zusätzliche Montageaufwand ist die Kameraeinheit im Lampengehäuse selbst untergebracht, und elektrische Einrichtungen -- etwa die in der Stromversorgung -- werden ohne wesentlichen zusätzlichen Aufwand mitbenutzt.

Unter Bezug auf die Fig. 3 wird im weiteren das Zusammenwirken der elektronischen Funktionsbaugruppen der Erfindung weiter detailliert beschrieben.

Das Sensorelement 28 weist, wie in der Fig. 3 gezeigt, ein PIR-Sensorelement 40 zur Bewegungserfassung auf, welches bevorzugt mit einer Gegentaktunterdrückung ausgestattet ist. Derartige Detektorelemente werden etwa von der Firma Heimann vertrieben. Darüber hinaus ist das Sensorelement 28 mit einem Helligkeits- bzw. Dämmerungssensor 42 versehen, welcher bevorzugt als LDR oder als Phototransistor realisiert ist und bevorzugt in einem Spektralbereich empfindlich ist, der sich von dem abgestrahlten Licht des verwendeten Leuchtmittels 38 aus Gründen einer Unempfindlichkeit gegen Eigenlicht unterscheidet. Beide Sensoren 40, 42 sind mit der Sensorelektronik 27 verbunden, und diese über eine Leuchtmittelansteuerung mit dem Leuchtmittel 38. Zweck des Dämmerungssensors 42 im Zusammenwirken mit dem Bewegungssensor 40 ist es, eine Aktivierung des Leuchtmittels 38 als Reaktion auf eine erfaßte (z.B. menschliche) Bewegung nur bei Außenlichtbedingungen zuzulassen, die aus der Sicht eines Benutzers eine Beleuchtung erfordern. Mit anderen Worten, solange -- etwa bei Tageslicht -- die Umgebungshelligkeit groß ist, wird auf das Signal des Helligkeitssensors 42, trotz ggf. erfolgter Bewegungserfassung durch den PIR-Sensor 40 -- eine Lampenaktivierung verhindert.

Erfindungsgemäß aktiviert das Steuermodul 27 zusätzlich die (CCD-) Kameraeinheit 30, wobei, besonders bevorzugt, die Aktivierung der Kameraeinheit 30 wiederum unabhängig von einer Umgebungshelligkeit gemäß Erfassung des Dämmerungssensors 42 erfolgt, also allein als Reaktion auf eine erfaßte Bewegung.

Das der Kameraeinheit 30 nachgeschaltete Sendemodul 32 ist im gezeigten Ausführungsbeispiel für den Hochfrequenzbereich, insbesondere eine beispielhaft gewählte Mittenfrequenz von 2,4 GHz ausgebildet, bevorzugt mit einem Sendespektrum innerhalb der ISM-Bänder, wobei eine mögliche Signalbandbreite etwa 7 MHz beträgt.

Dieses, sendeseitig über eine Antenne 34 abgestrahlte Bildsignal wird dann über eine Empfangsantenne 44 empfangen, die mit einer Empfangs- und Bildaufbereitungseinheit 46 zum Erzeugen des von der Kamera 30 aufgenommenen Bildes auf einem Monitor 48 eingerichtet ist. In der Fig. 3 nicht gezeigt ist eine jeweils notwendige Stromversorgung, die sendeseitig bevorzugt durch die ohnehin für den Bewegungssensor bzw. das Leuchtmittel erforderliche (Netz-) Stromversorgung erfolgt, und die empfangsseitig entweder durch ein geeignetes Netzteil oder aber durch eine Batterielösung realisiert sein kann. Insbesondere bietet es sich auch an, die durch die Empfangsantenne 44, die Empfangs- und Bildaufbereitungseinheit 46 sowie den Monitor 48 realisierte Empfangseinheit modular und portabel auszugestalten, so daß -- etwa durch einen Heimwerker -- die Einheit an geeigneter Stelle und ohne großen Aufwand etwa in einem Hausinneren angebracht werden kann, um dem Überwachungsnutzen der vorliegenden Erfindung möglichst flexibel zu nutzen. Diesbezüglich ist besonders die Funkstrecke zwischen Kamera und Monitor nützlich, denn dadurch ersparen sich aufwendige, und durch Nicht-Fachleute oft nur schwer zu realisierende Installationsarbeiten. Darüber hinaus wird die Flexibilität beträchtlich erhöht.

In geeigneter Weise ist zudem der Monitor 48 als handelsüblicher LCD-Monitor auszubilden, wie er etwa in seiner Verwendung mit portablen, stromsparenden Fernsehempfangsgeräten benutzt wird.

Selbstverständlich liegt es im Belieben des Fachmannes, die Erfindung im Hinblick auf die mechanischen und/oder elektronischen Eigenschaften jeweiligen Einsatz- und Benutzungserfordernissen anzupassen: So kann beispielsweise eine andere, geeignete Übertragungsfrequenz oder ein anderer, drahtlose Übertragungsmodus -- etwa auch im Wege einer IR-Bildübertragung -- gewählt werden. Auch ist nicht erforderlich, daß der Bewegungssensor etwa selbst auf Infrarotbasis arbeitet; hierfür bieten sich auch andere, geeignete Technologien an -- etwa die Verwendung von Bewegungssensoren auf Mikrowellen- bzw. Radarbasis. Diesbezüglich erscheint es zudem besonders interessant, als Alternative zur vorbeschriebenen Ausführungsform einen Mikrowellen-Bewegungssensor einzusetzen, welcher auf dem Breitband-Impulsradar-Prinzip beruht; diesbezüglich sind dann nicht nur (elektronische) Erfassungsbereichs-Einstellungen od.dgl. möglich; darüber hinaus ermöglicht ein Bewegungssensor auf Radarbasis etwa auch die verdeckte Anbringung im Lampengehäuse, also hinter einer (optisch undurchsichtigen) Gehäusewand. Darüber hinaus böte ein auf Mikrowellenbasis -- etwa auch in einem Frequenzband der Größenordnung zwischen 1,5 und 10 GHz -- arbeitender Sensor die Möglichkeit, das (Bewegungsradar-) Sendemodul doppelt, d.h. zusätzlich für die -- bevorzugt digitale -- Bildübertragung des Kamerasignals zu benutzen.

Darüber hinaus liegt es selbstverständlich im Rahmen der Erfindung, in geeigneter Weise einen auf IR-Basis wirkenden Bewegungssensor auszugestalten bzw. durch Blenden, Einstellmöglichkeiten o.ä. in seinem Erfassungsbereich einstellbar auszubilden.

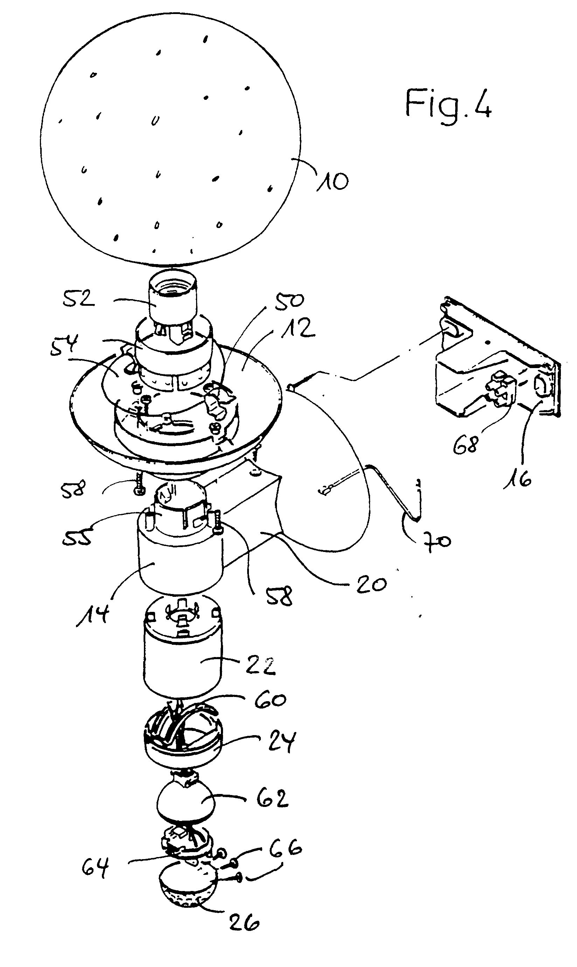

Unter Bezug auf die Explosionsdarstellung in Fig. 4 wird nunmehr der mechanische Aufbau einer erfindungsgemäßen Lampenvorrichtung der Darstellung gemäß Fig. 1 erläutert.

Wie der Explosionszeichnung zu entnehmen ist, wird der Lampenschirm 10 auf dem -- als Kunststoff-Gehäuseteil ausgebildeten -- Glaskugelhalter 12 mittels einer Mehrzahl von Klammern 50 gesichert; darüber hinaus ist in der Zeichnung eine Glühlampenfassung 52 für das Leuchtmittel 38 sowie ein Montage- und Abdeckring 54 gezeigt.

Über einen Ansatz 55 des Lampenträgers 14 ist der Glaskugelhalter 12 aufsteckbar und mittels Schrauben 58 gesichert.

Der zylindrische Gehäuseansatz 22 aus Acrylglas bildet den Kamerabschnitt aus und ist -- durch seine kreisförmige Führung zwischen dem Lampenträger 14 und dem unteren Linsenträger 24 drehbar ausgebildet. Durch diese Eigenschaft ist es dann möglich, durch entsprechendes Verdrehen des Kamera-Gehäuseansatzes 22 die darin gehaltene CCD-Kamera auszurichten bzw. auf einen gewünschten Erfassungsbereich zu positionieren.

Der bodenseitig vorgesehene Linsenhalter 24 weist einen Bügel 30 auf, der im Zusammenwirken mit einer Kunststoff-Halbschale 62 (die die Halbkugellinse 26 zu einem Kugelelement ergänzt) die Linse 26 in beliebige Richtungen dreh- bzw. ausrichtbar hält.

Das Bezugszeichen 64 zeigt eine Sensor- bzw. Steuerungsplatine, welche die Funktionsbaugruppen 40, 42 sowie 27 gemäß Blockschaltbild in Fig.3 aufweist. Mittels Stellstiften 66 sind auf der Platine 64 angeordnete Potentiometer für Einstellzwecke des Bewegungs- und Helligkeitssensors extern zugänglich.

Wandseitig ist der Lampenträger 14 über den Armabschnitt 20 mit der Wandhalterung 16 lösbar zu befestigen, wobei -- wie durch die Fig. angedeutet -- der Netzanschluß der erfindungsgemäßen Beleuchtungsvorrichtung mittels einer Lüsterklemme 68 der Wandhalterung 16 sowie einer Zuleitung 70 erfolgt.

Für eine einfache Montage ist es somit ausreichend, die Wandhalterung an einer geeignet gewählten Stelle, etwa neben einem Hauseingang, an der Außenwand zu befestigen und für eine Netzstromzuleitung zu sorgen.

Hierdurch wird dann erfindungsgemäß nicht nur das Leuchtmittel samt bewegungs- und helligkeitsgesteuerter Aktivierung versorgt; darüber hinaus ist damit vorteilhaft auch die in das Lampengehäuse integrierte Kameraeinheit mit Strom versorgbar, die -- da ihre Bildsignale drahtlos ausgesendet werden -- keiner weiteren Leitungen bedarf.

In mechanisch einfacher Weise ist durch die gezeigte Anordnung nicht nur die Kameraeinheit auf den gewünschten Erfassungsbereich -- der weiter bevorzugt durch das Leuchtmittel bei Dunkelheit zur Bilderfassung ausreichend beleuchtet wird -- ausrichtbar; darüber hinaus sorgt die für die Aktivierung des Leuchtmittels vorhandene Bewegungserfassung für die bevorzugt simultane Aktivierung der Kameraeinheit. Selbstverständlich können andere Einrichtungen vorhanden sein, die etwa in geeigneter Weise die Kameraeinheit in einen Dauer-Erfassungszustand oder einen anderen Betriebsmodus versetzen.

Auch bietet es sich gemäß einer alternativen Weiterbildung an, das Kameramodul über einen geeigneten (Schnittstellen-) Stecker und eine entsprechende mechanische Ankopplung modular und nachrüstbar auszubilden, so daß etwa herkömmliche, vorhandene (bewegungsgesteuerte) Sensorleuchten zu der erfindungsgemäßen Vorrichtung nachgerüstet werden können, oder aber die Kameraeinheit an einer ggf. optisch günstigeren Stelle plaziert werden kann.

Gemäß einer weiteren, alternativen Ausführungsform ist es zudem möglich, die CCD-Kamera, eine zugeordnete Optik oder einen vergleichbaren Bilderfassungsbereich über eine Bohrung aus dem zugeordneten Gehäuseabschnitt herauszuführen; in dieser Ausbildung wäre dann der Gehäuseabschnitt auch aus lichtundurchlässigem Material zu fertigen, und eine geeignete Optik -- etwa in Stecknadelkopfgröße -- tritt nicht auffallend in Erscheinung.

## Patentansprüche

1. Sensorleuchte mit einem als Reaktion auf ein Ausgangssignal eines an oder in einem Leuchtengehäuse (20) angeordneten Bewegungs-Erfassungssensors (26) aktivierbaren Leuchtmittel (38),
**gekennzeichnet durch**
eine am oder im Leuchtengehäuse (20) vorsehbare elektronische Bilderfassungseinrichtung (30), die durch das Ausgangssignal des Bewegungs-Erfassungssensors in einen Bilderfassungsmodus aktivierbar ist und zum Zusammenwirken mit einem drahtlosen Bildübertragungsmodul (32) für ein im Bilderfassungsmodus erzeugtes Bildsignal ausgebildet ist.

2. Sensorleuchte nach Anspruch 1, **dadurch gekennzeichnet, daß** das Bildübertragungsmodul eine an oder im Leuchtengehäuse vorgesehene Bildsendeeinheit (32) aufweist, die zum Zusammenwirken mit einer extern vorsehbaren, einen Monitor (48) zum Darstellen des Bildsignals aufweisenden Empfangseinheit (46) ausgebildet ist.

3. Sensorleuchte nach Anspruch 1 oder 2, **dadurch gekennzeichnet, daß** das Bildübertragungsmodul eine im Hochfrequenzbereich betreibbare Funkstrecke aufweist.

4. Sensorleuchte nach Anspruch 1 oder 2, **dadurch gekennzeichnet, daß** das Bildübertragungsmodul eine auf Infrarot-Basis wirkende Übertragungsstrecke aufweist.

5. Sensorleuchte nach einem der Ansprüche 1 bis 4, **dadurch gekennzeichnet, daß** die elektronische Bilderfassungseinrichtung einen CCD-Kamerasensor sowie eine entsprechend angepaßte Aufnahme- und Speicherelektronik aufweist.

6. Sensorleuchte nach einem der Ansprüche 1 bis 5, **dadurch gekennzeichnet, daß** die elektronische Bilderfassungseinrichtung in einen Gehäusebereich des Leuchtengehäuses integriert ist und das Leuchtengehäuse mindestens ein, der Bilderfassungseinrichtung zugeordnetes Fenster aufweist.

7. Vorrichtung nach Anspruch 6, **dadurch gekennzeichnet, daß** der Gehäuseabschnitt zum Einstellen der Richtung einer Bilderfassung durch die Bilderfassungseinrichtung verstellbar, insbesondere drehbar, ausgebildet ist.

8. Sensorleuchte nach einem der Ansprüche 1 bis 7, **dadurch gekennzeichnet, daß** der Bewegungs-Erfassungssensor ein auf Infrarot- oder Mikrowellenbasis arbeitender Bewegungssensor ist und in seinem Bewegungs-Erfassungsbereich verstellbar ausgebildet ist.

9. Sensorleuchte nach einem der Ansprüche 1 bis 8, **dadurch gekennzeichnet, daß** eine Beleuchtungsstärke des Leuchtmittels und/oder eine Empfindlichkeit der Bilderfassungseinrichtung so eingerichtet sind, daß bei einem Betrieb mit minimaler Umgebungshelligkeit eine Bilderfassung eines im Erfassungsbereich des Bewegungs-Erfassungssensors befindlichen Objektes möglich ist.

10. Sensorleuchte nach einem der Ansprüche 1 bis 9, **gekennzeichnet durch** eine am oder im Leuchtengehäuse (20) vorgesehene Tonerfassungs- und Übertragungsvorrichtung, die so ausgebildet ist, daß ein im Erfassungsbereich der Bilderfassungeinrichtung (30) auftretendes akustisches Signal aufgenommen und drahtlos übertragen werden kann.

## Claims

1. Sensor light with a lighting means (38) which can be activated as a reaction to an output signal of a movement detection sensor (26) arranged on or in a light housing (20), **characterised by** an electronic picture detection device (30) which can be provided on or in the light housing (20) and which can be activated in a picture detection mode by the output signal of the movement detection sensor and is designed for cooperation with a wireless picture transmission module (32) for a picture signal generated in the picture detection mode.

2. Sensor light according to claim 1, **characterised in that** the picture transmission module comprises a picture transmitting unit (32) which is provided on or in the light housing and which is designed for cooperation with a receiving unit (46) which can be provided externally and comprises a monitor (48) for display of the picture signal.

3. Sensor light according to claim 1 or 2, **characterised in that** the picture transmission module comprises a radio section which can be operated in the high-frequency range.

4. Sensor light according to claim 1 or 2, **characterised in that** the picture transmission module comprises a transmission section which works on an infrared basis.

5. Sensor light according to any of claims 1 to 4, **characterised in that** the electronic picture detection device comprises a CCD camera sensor and a correspondingly adapted electronic photography and memory unit.

6. Sensor light according to any of claims 1 to 5, **characterised in that** the electronic picture detection device is integrated in a housing region of the light housing, and the light housing comprises at least one window associated with the picture detection device.

7. Sensor light according to claim 6, **characterised in that** the housing section for adjustment of the direction of picture detection is designed to be displaceable, in particular rotatable, by the picture detection device.

8. Sensor light according to any of claims 1 to 7, **characterised in that** the movement detection sensor is a movement sensor which works on an infrared or microwave basis and is designed to be displaceable within its movement detection range.

9. Sensor light according to any of claims 1 to 8, **characterised in that** a luminous intensity of the lighting means and/or sensitivity of the picture detection device are designed in such a way that, during operation with minimal ambient brightness, picture detection of an object located within the detection range of the movement detection sensor is possible.

10. Sensor light according to any of claims 1 to 9, **characterised by** a sound detection and transmission device which is provided on or in the light housing (20) and which is designed in such a way that an acoustic signal occurring within the detection range of the picture detection device (30) can be picked up and transmitted wirelessly.

## Revendications

1. Lumière de capteur comprenant un moyen d'éclairage 38 susceptible d'être activé en réaction à un signal de sortie d'un capteur 26 de saisie de déplacement disposé sur ou dans un boîtier d'éclairage (20),
**caractérisée par** un dispositif électronique de saisie d'image (30) prévu sur ou dans le boîtier d'éclairage (20), lequel dispositif est susceptible d'être activé par le signal de sottie du capteur de saisie de déplacement dans un module de saisie d'image, et en ce qu'il est réalisé pour coopérer avec un module de transmission d'image sans fil ou par radio (32) pour un signal d'image créé dans le module de saisie d'image.

2. Lumière de capteur selon la revendication 1, **caractérisée en ce que** le module de transmission d'image comporte une unité (32) d'émission d'image prévue sur ou dans le boîtier d'éclairage, laquelle unité est réalisée pour coopérer avec une unité de réception (46) prévue à l'extérieur et comportant un moniteur (48) pour visualiser le signal d'image.

3. Lumière de captent selon la revendication 1 ou 2, **caractérisée en ce que** le module de transmission d'image comporte un étage radio susceptible de fonctionner en haute fréquence.

4. Lumière de capteur selon la revendication 1 ou 2, **caractérisée en ce que** le module de transmission d'image comporte une partie de transmission fonctionnant à partir de l'infra-rouge.

5. Lumière de capteur selon l'une des revendications 1 à 4, **caractérisée en ce que** le dispositif électronique de saisie d'image comporte un capteur de caméra CCD ainsi qu'une électronique de stockage et de captage adaptée de façon correspondante.

6. Lumière de capteur selon l'une des revendications 1 à 5, **caractérisée en ce que** le dispositif électronique de saisie d'image est intégré dans une zone de boîtier du boîtier d'éclairage, et en ce que le boîtier d'éclairage comporte au moins une fenêtre associée au dispositif de saisie d'image.

7. Dispositif selon la revendication 6, **caractérisé en ce que** le tronçon de boîtier pour régler la direction d'une saisie d'image est réalisée réglable, en particulier susceptible de tourner par le dispositif de saisie d'image.

8. Lumière de capteur selon l'une des revendications I à 7, **caractérisée en ce que** le capteur de saisie de déplacement est un capteur de déplacement fonctionnant à partir de l'infra-rouge ou des micro-ondes, et en ce qu'il est réalisé réglable dans sa zone de saisie de déplacement.

9. Lumière de capteur selon l'une des revendications 1 à 8, **caractérisée en ce que** l'intensité d'éclairage du moyen d'éclairage et/ou la sensibilité du dispositif de saisie d'image sont réglés de telle façon que pour un fonctionnement au minimum d'éclairage ambiant, il soit possible de réaliser une saisie d'image d'un objet se trouvant dans la zone de saisie du capteur de saisie de déplacement.

10. Lumière de capteur selon l'une des revendications 1 à 9, **caractérisée par** un dispositif de transmission et de saisie de ton ou entre solides prévu sur ou dans le boîtier d'éclairage (20) et qui est réalisé de telle façon qu'un signal acoustique apparaissant dans la zone de saisie du dispositif de saisie d'image (30) puisse être enregistré et transmis sans fil.
